(19) Europäisches Patentamt / European Patent Office / Office européen des brevets

(11) **EP 3 945 719 B1**

(12) **EUROPÄISCHE PATENTSCHRIFT**


(45) Veröffentlichungstag und Bekanntmachung des Hinweises auf die Patenterteilung:
**27.12.2023 Patentblatt 2023/52**

(21) Anmeldenummer: **20188496.2**

(22) Anmeldetag: **30.07.2020**

(51) Internationale Patentklassifikation (IPC):
***H04N 9/67*** *(2023.01)* ***H04N 1/60*** *(2006.01)*

(52) Gemeinsame Patentklassifikation (CPC):
**H04N 9/67; H04N 1/6061**


(54) **VERFAHREN ZUR FARBRAUMTRANSFORMATION**

COLOR SPACE CONVERSION METHOD

PROCÉDÉ DE TRANSFORMATION D'ESPACE COULEUR


(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.02.2022 Patentblatt 2022/05**



(73) Patentinhaber: **Hochschule Rheinmain University of Applied Sciences Wiesbaden Rüsselsheim**
**65197 Wiesbaden (DE)**

(72) Erfinder:
- **CHRISTMANN, Mike**
  **56357 Lierschied (DE)**
- **KUTSCHBACH, Pascal**
  **55252 Mainz-Kastel (DE)**
- **LENZEN, Lucien**
  **36037 Fulda (DE)**

(74) Vertreter: **Stumpf, Peter**
**c/o TransMIT GmbH**
**Kerkrader Strasse 3**
**35394 Gießen (DE)**



(56) Entgegenhaltungen:
**EP-A1- 0 611 230** **EP-B1- 0 611 230**
**US-A1- 2019 158 894** **US-A1- 2019 325 802**
**US-A1- 2020 106 928**



Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Bildverarbeitungsverfahren. Das Verfahren dient zur Farbraumtransformation eines Bildes (oder einer zusammenhängenden Bildsequenz) um ein Bild mit einem ersten Farbraum (z.B. ein HDR-WCG-Bild) in ein Bild mit einem zweiten Farbraum (z.B. ein SDR-SCG-Bild) zuverlässig und unter Beibehaltung des Wahrnehmungseindrucks zu transformieren.

## Beschreibung und Einleitung des allgemeinen Gebietes der Erfindung

In der heutigen Zeit werden viele Bewegtbildproduktionen mit Kameras durchgeführt, die in der Lage sind, einen sehr großen Helligkeits- und Farbumfang einzufangen. Die Mehrheit der in Verwendung befindlichen Wiedergabegeräte (Fernseher, Beamer, Displays, Smartphones, Tablets) kann diesen enormen Helligkeits- und Farbumfang (noch) nicht darstellen. Es muss demnach eine gleichzeitige Bereitstellung älterer Signalformate (oftmals mit SDR = Standard Dynamic Range bezeichnet) und neuerer Signalformate (oftmals mit HDR = High Dynamic Range bezeichnet) geben, um alle Wiedergabegeräte bespielen zu können. Neben dem Helligkeitsumfang, der oftmals mit Dynamic Range umschrieben wird, muss auch eine dedizierte Betrachtung des jeweiligen Farbumfangs erfolgen. Ältere Signalformate weisen einen kleineren Farbumfang (SCG = Standard Color Gamut) im Vergleich zu neueren Signalformaten (WCG = Wide Color Gamut) auf.

Die Begriffe HDR und WCG beschreiben dabei verschiedene Techniken zur Aufnahme und Wiedergabe von Bildern mit großen Helligkeits- und Farbumfängen. Um größere Farb- und Helligkeitsvolumen verarbeiten zu können, müssen HDR-/WCG-Inhalte und HDR-/WCGfähige Wiedergabegeräte nach einer neuen Logik miteinander "kommunizieren". Es gilt neue Regeln aufzustellen, wie ein Wiedergabegerät die (elektronischen) Daten interpretiert und wieder in (optische) Lichtsignale umwandelt, die es darstellen kann. Die Umwandlung geschieht auf Grundlage sogenannter elektro-optischer Transferfunktionen (EOTF). Eine EOTF ist eine Korrekturfunktion, mit der elektrische Spannungen in darstellbare Helligkeitswerte umgerechnet werden. Bei der EOTF geht es um die Invertierung der Optisch-Elektrischen-Transfer-Funktion (OETF) und damit dem Ausgleich des nichtlinearen Zusammenhangs zwischen erzeugter Spannung bei der Aufnahme durch einen Bildsensor und der wahrgenommenen Helligkeit durch das menschliche Auge. Da diese nicht linear mit den Spannungswerten verläuft, muss die Display-Darstellung angepasst werden.

Erfolgt eine solche Anpassung durch eine Gammakurve, spricht man von einer Gammakorrektur. Der Begriff der Gammakorrektur stammt aus der analogen Aufnahmetechnik. Im Bereich der HDR-Aufnahmetechnik werden heutzutage komplexere Korrekturfunktionen verwendet. Die EOTF bildet die Gegenfunktion zur Aufnahmeseite. Diese wird durch die Optisch-Elektrische Transferfunktion, Optical-Electrical Transfer Function (OETF), gebildet. Die OETF bestimmt den nichtlinearen Verlauf der Kamerakennlinie. Ein Bildsensor reagiert - bis fast an die Full Well Capacity heran - mit linearer Zunahme der Elektronen auf einfallendes Licht. Die menschliche Helligkeitswahrnehmung folgt einer nichtlinearen Kennlinie. Um den linearen Spannungsverlauf kameraseitig an die nötige nichtlineare Wiedergabecharakteristik anzupassen, erfolgt eine nichtlineare Verzerrung des einfallenden Lichts.

Die Full Well Capacity bezieht sich auf einen Pixel innerhalb eines Bildsensors und beschreibt die Kapazität der Ladung, die der Pixel aufnehmen kann, bevor dieser den Bereich der Sättigung erreicht.

HDR-WCG-Bildinhalte sollten so konvertiert werden, dass sie ihren Wahrnehmungseindruck nach der Konversion zu SDR-SCG-Bildinhalten beibehalten. Sowohl der Helligkeitseindruck als auch der Farbeindruck sollten möglichst akkurat umgesetzt werden. Eine wertegenaue Umsetzung ist nicht möglich, da die Farb- und Helligkeitswerte im Vergleich zwischen HDR-WCG-Bildinhalten und SDR-SCG-Bildinhalten absolut andere Werte besitzen. Der Wahrnehmungseindruck ist jedoch annähernd übertragbar. Eine solche Konversion sollte deswegen immer den Anspruch haben, wahrnehmungsgetreu zu erfolgen. Das Problem wurde bisher gelöst, indem ältere Verfahren zur Farbraumtransformation eingesetzt wurden. Dies war möglich, da ältere Verfahren auf ältere Signalformate angepasst sind, die aber immer häufiger nicht mehr eingesetzt werden, oder durch neuere Signalformate ergänzt werden. Ältere Farbrepräsentationen und Standards ($YC_BC_R$, Rec.709, Rec.1886, Legacy) ermöglichen die Darstellung eines wesentlich geringeren Helligkeits- und Farbumfangs, als es für HDR-WCG-Bildsignale nötig ist. Aus diesem Grund müssen neue Wege gefunden werden, wie eine Farbraumtransformation für neuere Farbrepräsentationen effizient und akkurat durchgeführt werden kann.

## Stand der Technik

Der Transformationsfarbraum wird bei den bisher verwendeten Farbraumtransformationsverfahren oftmals in die Achsen Helligkeit, Farbsättigung und Bunttonwinkel aufgeteilt. Es folgt die Eliminierung der Dimension des Bunttonwinkels und die Darstellung des Farbraumes mittels der verbliebenen Achsen Helligkeit und Farbsättigung (analog zur Vorgehensweise aus Abbildung Fig.8). Ein Quellfarbort wird in der zweidimensionalen Ebene verschoben. Die Verschiebung erfolgt häufig auf Basis von Geraden oder Kurven. Ziel ist immer, dass sich der Farbort durch die Verschiebung

innerhalb der Grenze des Zielfarbraumes befindet. Dieser Verfahrensblock ist als kleinster gemeinsamer Nenner aller Farbraumtransformationsverfahren zu sehen, die als Abwärtskonversion aufgebaut sind. Die Einzigartigkeit eines solchen Verfahrens wird eher durch die Vor- oder Nachbehandlung der Position des Farb-ortes oder durch die Wahl eines speziellen Transformationsfarbraumes erreicht. In den meisten bekannten Transformationsverfahren wird bis zum heutigen Zeitpunkt L*a*b* als Transformationsfarbraum verwendet. Der L*a*b*-Farbraum (auch: CIELAB, CIEL*a*b*, Lab-Farben) beschreibt alle wahrnehmbaren Farben. Er nutzt einen dreidimensionalen Farb-Raum, bei dem der Helligkeitswert L* senkrecht auf der Farbebene (a*,b*) steht. Das Farbmodell ist in der EN ISO 11664-4 "Colorimetry -- Part 4: CIE 1976 L*a*b* Colour space" genormt. Obwohl diese Farbrepräsentation eine gute Gleichförmigkeit der Bunttondarstellung bietet, so ist sie doch ungeeignet für HDR-Farbraumtransformationen, wo große Differenzen der Helligkeit und Chromatizität angeglichen werden müssen.

In der Schrift US020190098317A1 wird eine Farbrepräsentation nach $IC_TC_p$ und deren Herleitung von CIE XYZ, bzw. RGB- Signalen vorgeschlagen. Das Thema des Gamut-Mapping wird dort insofern erwähnt, als das zwei simple Methoden dafür vorgeschlagen werden. Wenn ein Farbort nicht im zulässigen Farbgamut (2D) liegt, so wird in der Schrift vorgeschlagen, dass der Farbort in seinem Sättigungswert reduziert wird, bis er im Zielfarbgamut liegt. Eine gleichzeitige Betrachtung des Helligkeitswertes des Farbortes bleibt aus.

In der Schrift US020190325802A1 wird ein Farbraumtransformationsverfahren auf Basis der Farbrepräsentation ICH beschrieben. ICH leitet sich vom Farbdifferenzsignalformat $IC_TC_P$ ab. Der Helligkeitswert I ist für ICH und $IC_TC_P$ identisch, während C dem Farbsättigungswert und H dem Bunttonwinkel entspricht. C berechnet sich durch die Wurzel der quadrierten Summe aus $C_T$ und $C_P$. H berechnet sich durch den Arcus-Tangens des Quotienten aus $C_P$ und $C_T$. Die Methodik in dieser Schrift basiert auf einer linearen oder Kurvenbasierten Regressionsberechnung. Die Berechnung erfolgt auf Basis eines Kompressionsfaktors, der für jeden außerhalb eines Zielfarbraumes liegenden Farbort berechnet wird. Eine gleichzeitige Betrachtung des Helligkeits- und des Chromatizitätswertes des Farbortes findet nicht statt. Die Betrachtung eines Farbortes, der außerhalb der Zielfarbgamutgrenze liegt, erfolgt immer anhand seines Chromatizitätswertes und nur für einen Helligkeitswert. Eine weitere Grenze des Verfahrens stellt sich durch die Darstellung der Farbgamutgrenzen in den Bunttonblättern dar. Der maximale Helligkeitswert des Quell- und Zielbunttonblattes ist derselbe, was dazu führt, dass sich die Bunttonblätter nur in ihrem maximalen Chromatizitätswert (Cusp-Punkt) unterscheiden. Auch eine Unterscheidung der Bunttonwinkeldifferenzen des Quell- und Zielfarbraumes wird nicht spezifiziert. Ein Cusp Punkt ist der Punkt in einem Bunttonblatt, der den größten Farbsättigungswert bei gleichzeitig größtmöglichem Helligkeitswert besitzt.

Die Schrift US2019158894 offenbart ein Gamut-Mapping-Verfahren mit einer Bunttonverschiebung basierend auf Ankerpunkten, wobei Farborte in einem Bereich des Transformationsfarbraums nicht verändert werden, sowie Soft-Clipping innerhalb des sich ergebenden Bunttonblattes, basierend auf der Definition von unterschiedlichen Mapping-Regeln für unterschiedliche Regionen innerhalb des Bunttonblattes.

Die Schrift US20201069928 offenbart ein Gamut-Mapping-Verfahren das Farborte in einem Bereich des Transformationsfarbraums nicht verändert. Bunttonwerte der Primär- und Sekundärvalenzen des Quellfarbraums werden mittels geometrischer Abbildungsvorschriften in Richtung derer des freidefinierbaren geschützten Bereichs verschoben, die auch die Primär- und Sekundärvalenzen des Zielfarbraums sein können.

Die Schrift EP0611230 offenbart ein flexibles Gamut-Mapping-Verfahren in dem Bunttonwinkel, Sättigung und Luminanz mittels Funktionen aller 3 Dimensionen angepasst werden. D4 offenbart auch einen geschützten Bereich des Transformationsfarbraums in dem Farborte nicht verändert werden.

Im Bereich der Farbraumtransformationen gibt es zum aktuellen Zeitpunkt viele weitere Schriften. Überwiegend verwenden die dort beschriebenen Farbraumtransformationen CIE LAB, $YC_BC_R$, YUV oder RGB als Signaldarstellung bzw. Transformationsfarbraum. Der Ablauf fordert immer die Transformation in einen Transformationsfarbraum, in dem das Mapping stattfindet und eine anschließende Rücktransformation in den gewünschten Ausgangsfarbraum.

## Aufgabe

Aufgabe der vorliegenden Erfindung ist es die Nachteile des Standes der Technik zu überwinden und ein Bildverarbeitungsverfahren bereitzustellen, welches eine wahrnehmungsgetreue Farbraumtransformation insbesondere für neuartige HDR-WCG-Bildsignale ermöglicht.

## Lösung der Aufgabe

Gelöst wird diese Aufgabe durch ein Verfahren mit den Merkmalen des Anspruchs 1. Vorteilhafte Ausführungsformen und Weiterbildungen der vorliegenden Erfindung ergeben sich aus den Unteransprüchen.

Zunächst werden einige für die Beschreibung des erfindungsgemäßen Verfahrens wichtige Begriffe geklärt und erläutert, wie diese im Rahmen dieser Erfindung zu verstehen sind:

Buntton: Ein vom Menschen wahrgenommener Farbreiz lässt sich durch drei grundlegende Eigenschaften charakterisieren. Diese sind der Buntton, die Helligkeit und die Farbsättigung. Der Buntton beschreibt dabei die Eigenschaft in der Farbenlehre, nach der man Farbempfindungen unterscheidet. So kann man beispielsweise Rot, Grün und Blau differenzieren. Der dem Farbton zugeordnete Farbwert wird daher auch Buntton genannt, und typischerweise als Winkelwert angegeben.

Farbraum: Als Farbraum können je nach Quelle verschiedene Dinge beschrieben werden. Ein Farbraum kann eine mathematische Farbrepräsentation beschreiben (Beispiele: RGB, XYZ, $IC_TC_P$, LAB). Der Begriff Farbraum kann aber auch einen bestimmten Farbumfang innerhalb einer Farbrepräsentation beschreiben (Beispiele: ITU-R BT.2100, ITU-R BT.709, DCI P3). In diesen Standards wird der Farbumfang als zweidimensionale Begrenzung in Form von CIE-xy-Koordinaten angegeben. Erst in Kombination mit einer EOTF wird aus dieser zweidimensionalen Farbraumbegrenzung ein dreidimensionaler Farbraum. In der Beschreibung des erfindungsgemäßen Verfahrens wird der Begriff Farbraum für dreidimensionale mathematische Farbrepräsentationen verwendet.

Es gibt verschiedene Methoden, um den Farbraum auszudrücken (z. B. Diagramme). Am häufigsten wird für Anzeigegeräte die (zweidimensionale) CIE-xy-Farbtafel verwendet, die aus dem CIE-XYZ-Farbraumsystem abgeleitet ist und von der Internationalen Beleuchtungskommission (CIE) festgelegt wurde. In der folgenden CIE-xy-Farbtafel zeigt der Bereich, der einem umgekehrten "U" ähnelt und von einer schwarzen Linie umgeben ist, den Farbumfang an, der für das menschliche Auge sichtbar ist. Untermengen in dieser Farbtafel werden benutzt, um Farbumfänge von Aufnahme- oder Wiedergabegeräten anzuzeigen. Die Untermengen entsprechen den in Abbildung Fig.9 angezeigten Dreiecken. Es gilt zu beachten, dass diese Dreiecke alle möglichen Farborte angeben, die von einem Aufnahme- oder Wiedergabegerät verarbeitet werden können. Diese Art der Diagrammdarstellung zeigt nicht, bei welchen Helligkeitswerten die Farborte dargestellt werden können. Weiterhin ist es möglich, dass beispielsweise Kameras imaginäre Farborte aufnehmen können. Dies sind Farborte, die aufgrund ihres Farbreizes physikalisch außerhalb des sichtbaren Lichtspektrums des menschlichen Auges liegen, vom Kamerasensor aber aufgenommen werden können. In der CIE xy Farbtafel tauchen diese Farborte als Orte auf, die außerhalb des CIE-Hufeisens liegen.

Ein technisch wichtiger Farbraum ist dabei der $IC_TC_P$-Farbraum, der als Teil der Farbbildpipeline in Video- und digitalen Fotografiesystemen für HDR- (High Dynamic Range) und Wide-Color-Gamut- (WCG-) Bilder verwendet wird und in der Norm ITU-R BT.2100 der International Telecommunication Union (ITU) als Signalformat definiert ist.

Farbgamut: Als Farbgamut wird ein begrenzter mehrdimensionaler Umfang an Farborten in einer mathematischen Farbrepräsentation bezeichnet. Die Dimensionen eines Farbgamuts beziehen sich auf die Farbort-beschreibenden Dimensionen einer Farbrepräsentation. In der Regel sind dies alle Dimensionen, die nicht die Helligkeit beschreiben (siehe Abbildung Fig.9).

Farbort: Als Farbort ist eine bestimmte Farbe in einer bestimmten Farbrepräsentation zu verstehen, die durch ihre mathematischen Werte exakt beschrieben ist. In der Regel wird ein Farbort mit Hilfe von drei Werten angegeben. Der Farbort liegt als Punkt im oder auf dem Farbkörper, und wird im Farbraum mit geeigneten Koordinaten in seiner Lage beschrieben. Dieser Ort repräsentiert die vereinbarte Farbe. Farborte sind in Farbräumen kontinuierlich beschreibbar, ihre reale Präsentation ist abhängig vom Wiedergabemedium und deswegen naturgemäß nur diskontinuierlich möglich. Ein weiterer Faktor, der die reale Präsentation von diskontinuierlichen Farborten fördert, ist die Quantisierung, die im Laufe einer Bildwiedergabe auf das Signal angewendet wird.

Helligkeit: Ein vom Menschen wahrgenommener Farbreiz lässt sich durch drei grundlegende Eigenschaften charakterisieren. Diese sind der Buntton, die Helligkeit und die Farbsättigung. Die Helligkeit ist dabei zunächst ein Überbegriff subjektiver Eindrücke und objektiver Messgrößen für die Stärke visueller Wahrnehmungen durch das menschliche Auge. In der Beschreibung des erfindungsgemäßen Verfahrens ist mit der Helligkeit stets die Kenngröße der subjektiven Lichtempfindung des Menschen gemeint. Sie beschreibt, welche Lichtmenge auf die Netzhaut des Auges trifft.

Luminanz: Die Luminanz ist eine fotometrische Größe aus der Videotechnik, die als Maß für die Helligkeit von Bildpunkten verwendet wird. Physikalisch entspricht sie exakt der Leuchtdichte mit der Einheit $cd/m^2$. Der Begriff "Luminanz" betont jedoch den speziellen Kontext der Videotechnik und dass in der Regel in Einheiten der maximalen Leuchtdichte gerechnet wird. Außerdem handelt es sich bei der Luminanz um ein übertragenes Signal, das die Richtungsabhängigkeit der Leuchtdichte ignoriert sowie nur dann proportional zur Leuchtdichte ist, wenn der Bildschirm optimal kalibriert ist.

Der englische Begriff Luminance steht sowohl für Leuchtdichte als auch für Luminanz. Die Luminanz bezeichnet weiterhin immer den Helligkeitskanal eines Farbdifferenzsignals.

Farbmodell: Farbmodelle dienen der Beschreibung und Spezifikation von Farben. Ein Farbmodell entsteht aus einem abstrakten Farbsystem und ist meist dreidimensional damit es auch grafisch dargestellt werden kann. Farbmodelle können dabei von unterschiedlicher Form sein. Innerhalb eines Farbmodelle sind allen Farben eindeutige Zahlenwerte, den Farborten, zugeordnet.

Wird der Farbort einer Farbe mit Hilfe einer Software innerhalb des gleichen Farbmodells geändert, so kann ein Informationsverlust entstehen. Auch durch den Übertragungsweg bis zur farbgebenden Methode (Wiedergabegerät) können diese Qualitätsverluste entstehen. Der Grad eines Qualitätsverlustes hängt vom übertragenden Medium und dem Signalformat ab. Weiterhin entscheidend ist der Grad des Chroma-Subsamplings. Chroma-Subsampling beschreibt die Unterabtastung der Farbinformationen in einem Farbdifferenzsignal. Diese Form der Unterabtastung wird zur Datenreduktion bei der Übertragung angewandt und ist möglich, weil das menschliche Auge viel eher auf Helligkeitsdifferenzen, als auf Farbdifferenzen reagiert. Um Qualitätsverluste bei der Übertragung zu vermeiden, können die Differenzierungsstufen innerhalb des Farbmodells erhöht werden.

Chrominanz: Die Chrominanz oder auch Farbsättigung bezeichnet in der Videotechnik ein Signal mit Informationen über die wahrgenommene Kräftigkeit einer Farbdarstellung. Diese wird implizit parallel mit der Luminanz übertragen. Die grundlegend verwendete Signalform bei der Übertragung von Farbdifferenzsignalen ist durch die jeweiligen kartesischen Koordinatenwerte der Farborte gegeben. Dies ist zum Beispiel $YC_BC_R$. Aus dieser Signalform lassen sich die Polarkoordinaten des jeweiligen Farbortes berechnen. Dies ist zum Beispiel YCH. Die Chromatizität C berechnet sich dabei aus $C_B$ und $C_R$ und wird deshalb nur implizit übertragen. Das Helligkeitssignal (Luminanz) entspricht aus Gründen der Kompatibilität oft dem reinen Schwarzweiß-Bild. Zusammen mit der Angabe des Bunttonwinkels H (ebenfalls durch implizite Übertragung gegeben) liefern diese drei Metriken vollständige Informationen über das farbige Bild. Im Gegensatz dazu gibt es Farbmodelle, die einen Farbort durch die Mischung von drei Grundfarben angeben, wie der RGB-Farbraum.

Der vom Menschen, aufgrund seiner Physiologie, wahrnehmbare Farbraum hat die dreidimensionale Form eines Doppelkegels. Damit ein menschlicher Betrachter vollständige Farb-Informationen erhält, muss eine Übertragung von Farbsignalen immer mit mindestens drei Signalen erfolgen. Dies können RGB-Signale (Helligkeitsangabe pro Farbkanal) oder Farbdifferenzsignale (Helligkeitsangabe ist getrennt von den Angaben der Farbposition) sein.

Für die Übertragung von Fernsehsignalen werden in der Regel Farbdifferenzsignale verwendet. Die Festlegung auf zwei Kanäle für die Übertragung der Farbinformation ist für die vollständige Abbildung der Farbinformation allerdings nicht grundsätzlich gegeben, sondern durch den speziellen Aufbau des menschlichen Auges bestimmt. Die beiden für menschliche Betrachter benötigten Farbsignale spielen sowohl beim analogen als auch beim digitalen Farbfernsehen, bei der Videoübertragung, der Farbfotografie und den dabei verwendeten Farbmodellen eine Rolle. In allen diesen Fällen bezeichnet *Y* das Helligkeitssignal, die folgenden beiden Großbuchstaben wie $C_BC_R$ die Chrominanzsignale. Diese werden je nach Anwendung unterschiedlich gebildet, woraus sich die verschiedenen Bezeichnungen ergeben. Wichtige Abkürzungen sind:

CL (Constant Luminance): Farbrepräsentation, bei dem die Bildung des Helligkeitskanals aus nicht-konstanten, verzerrten Werten erfolgt. Die Verzerrung entspricht für HDR-Produktionen in etwa der inversen Charakteristik der Helligkeitswahrnehmung des menschlichen Auges. Dadurch kann der Helligkeitskanal, mit dem Bezugspunkt des menschlichen Auges, als konstant angenommen werden. CL-Signale haben eine sehr geringe Korrelation zwischen den Kanälen. Beispiel: $IC_TC_P$

NCL (Non-Constant Luminance): Farbrepräsentation, bei dem die Bildung des Helligkeitskanals aus nicht-konstanten, verzerrten Werten erfolgt. Die Verzerrung entspricht nicht der inversen Charakteristik der Helligkeitswahrnehmung des menschlichen Auges. Dadurch entsteht eine zwar hohe, aber für SDR-Bildsignale vernachlässigbare Korrelation zwischen den Signalkanälen. Beispiele: CIE Yxy, CIE Yuv, $YC_BC_R$ (digital), $YP_BP_R$ (analog)

| Farbmodell | Anwendung: analog / digital | Luminanzcharakteristik | Anwendung: Normen und Standards, Geräte |
|---|---|---|---|
| CIE Yxy | digital | NCL | Darstellung der Wiedergabefähigkeit von Farb-Umfängen von Wiedergabegeräten und Wahrnehmungsfähigkeit von Farbumfängen des Auges |
| Yuv | digital/analog | NCL | Serielle Bildübertragung (z.B SDI), Darstellung der Wiedergabefähigkeit von Farb-Umfängen von Wiedergabegeräten und Wahrnehmungsfähigkeit von Farbumfängen des Auges |
| $YC_BC_R$ | digital | NCL | Serielle Bildübertragung, Bild-/Videoübertragung gemäß MPEG und JPEG, DVD, digitales PAL und NTSC, DVB |

(fortgesetzt)

| Farbmodell | Anwendung: analog / digital | Luminanzcharakteristik | Anwendung: Normen und Standards, Geräte |
|---|---|---|---|
| $YP_BP_R$ | analog | NCL | Component Video-Signal (Videorekorder, Spielkonsolen, Flachbildschirme) |
| $IC_TC_P$ | Digital | CL | Bild-/Videoübertragung von HDR-Bildmaterial |

Lichtart: Als Lichtart wird die Angabe der Strahlungsfunktion einer Lichtquelle bezeichnet. Die Strahlungsfunktion beschreibt die Strahlungsverteilung einer Lichtquelle in Bezug auf die Wellenlänge. Durch unterschiedliche Spektren von Lichtquellen entstehen unterschiedlich wahrgenommene Lichtfarben. Lichtarten werden mit Abkürzungen angegeben. Eine "D65"-Lichtart entspricht Tageslicht mit einer Farbtemperatur von 6500 Kelvin.

Sättigung: Ein vom Menschen wahrgenommener Farbreiz lässt sich durch drei grundlegende Eigenschaften charakterisieren. Diese sind der Buntton, die Helligkeit und die Farbsättigung. Die Sättigung beschreibt dabei die Stärke der Farbwirkung und damit die Stärke der Unterscheidbarkeit eines farbigen Reizes zu einem achromatischen Reiz.

Transformationsfarbraum: Ein Transformationsfarbraum stellt eine mathematische Farbrepräsentation dar. Mit Hilfe dieser Farbrepräsentation kann eine Farbraumtransformation stattfinden. Hierzu werden alle Eingangsfarbwerte in den Transformationsfarbraum gewandelt. Im Transformationsfarbraum findet die Gamut-Transformation statt, dann werden alle Farbwerte in einen Ausgabefarbraum gewandelt.

Tripel: In der Regel erfolgt die mathematische Beschreibung eines Farbortes in den meisten Farbräumen durch drei Werte, sprich ein Tripel. Die Werte können dabei unterschiedliche Eigenschaften beschreiben. Beispiele hierfür sind: XYZ, RGB, LAB, LMS, $IC_TC_P$. Während die Werte im RGB- und LMS-Farbraum die Anteile unterschiedlicher Wellenlängen in der spektralen Zusammensetzung von elektromagnetischen Wellen beschreiben, stehen die Werte im LAB-, XYZ- und $IC_TC_P$-Farbraum für Helligkeiten und Farbausdehnungen. Zum Vergleich: Es gibt auch Farbräume, die einen Farbort durch mehr als drei Werte beschreiben: der Druckfarbraum CMYK.

Quellfarbraum: Als Quellfarbraum wird der Farbraum beschrieben, in dem die Farb-Orte vor jeglicher Umwandlung zu Beginn eines Transformationsprozesses vorliegen. Der Quellfarbraum kann auch Eingangs- oder Eingabefarbraum genannt werden.

Zielfarbraum: Als Zielfarbraum wird der Farbraum beschrieben, in den Farborte nach einer Gamut-Transformation gewandelt werden. Der Zielfarbraum kann auch Ausgabe- oder Ausgangsfarbraum genannt werden.

Das erfindungsgemäße Verfahren zur Farbraumtransformation eines Bildes (oder einer Bildfolge) umfasst dabei die folgenden Schritte:

**I. Festlegen des Transformationsfarbraumes und Wandlung eingehender Farborte in den Transformationsfarbraum**

Dabei wird zunächst der Transformationsfarbraum festgelegt, wobei ein Constant-Luminance Farbraum als Transformationsfarbraum verwendet wird. Die Begrifflichkeit Farbraum ist im Rahmen der folgenden Beschreibung auch durch Farbrepräsentation ersetzbar. Dies soll verdeutlichen, dass der Transformationsfarbraum kein beschränkter Farbraum ist, sondern die Art der Wertedarstellung bestimmt. Ein Constant-Luminance Farbraum stellt Farbanteile gleichförmig dar und bildet auf der Helligkeitsachse die logarithmische Kennlinie der Helligkeitswahrnehmung des Auges nach. Dies hat den Vorteil, dass insbesondere sehr helle und gesättigte Farben akkurat mathematisch dargestellt werden können. Durch die Verwendung wesentlich modernerer Verzerrungskurven auf der Helligkeitsachse, ist die Darstellung von Helligkeiten bis zu 10000 cd/$m^2$ möglich. Eine Constant-Luminance Farbrepräsentation ist weiterhin in der Lage eine sehr gute Entkopplung zwischen dem Helligkeits- und den Farbkanälen bereitzustellen. Dadurch lässt sich theoretisch die Änderung des Helligkeitsumfangs von der Änderung des Farbumfangs trennen. Im Bereich der Farbraumtransformationen gilt dies als wichtige Eigenschaft.

Eine geeignete Farbdifferenzdarstellung dieses Transformationsfarbraums stellt dabei $IC_TC_P$ dar. Eine geeignete dazugehörige Polarkoordinatendarstellung ist ICH.

Die Wandlung eingehender Farborte in eine CL-Farbrepräsentation wird im Folgenden am Beispiel $IC_TC_P$ beschrieben. Jede beliebige CL-Farbrepräsentation ist verwendbar.

Die Wandlung erfolgt mit Hilfe bekannter 3x3 Umwandlungsmatrizen und vorheriger Entzerrung der verzerrten Eingangssignale. Umwandlungsmatrizen dienen als einfache Form der Wandlung zwischen Farbrepräsentationen. Sie haben die Größe 3x3, da sie sich immer auf ein Eingangswertetripel beziehen. Nach bekannten Matrizenrechenregeln aus der Mathematik resultiert aus der Multiplikation eines Eingangswertetripels mit einer 3x3 Matrix ein Ausgangswertetripel. So wird aus einem eingehenden Farbort (durch drei Werte beschrieben) ein ausgehender Farbort (durch drei neue Werte beschrieben) in einer anderen Farbrepräsentation. Unter der Entzerrung eines verzerrten Eingangssignals versteht man die Linearisierung der verzerrten Eingangswerte. Die Entzerrung erfolgt dabei durch die Anwendung der entsprechenden EOTF. Die angewandte EOTF muss der inversen der zur Verzerrung des Signals verwendeten OETF entsprechen.

Bei RGB-Eingangssignalen:

$$\left.\begin{matrix} R'G'B' \\ RGB \end{matrix} \xrightarrow{EOTF} \right\} RGB \xrightarrow{3x3\ Matrix} XYZ \xrightarrow{3x3\ Matrix} LMS \xrightarrow{PQ-OETF} L'M'S' \xrightarrow{3x3\ Matrix} IC_TC_P \xrightarrow{Kart.-Pol.} ICH$$

Bei $YC_BC_R$-Eingangssignalen:

$$YC_BC_R \xrightarrow{3x3\ Matrix} R'G'B' \xrightarrow{EOTF} RGB \xrightarrow{3x3\ Matrix} XYZ \xrightarrow{3x3\ Matrix} LMS \xrightarrow{PQ-OETF} L'M'S' \xrightarrow{3x3\ Matrix} IC_TC_P \xrightarrow{Kart.-Pol.} ICH$$

Bei anderen Eingangssignalen:

$$\left.\begin{matrix} ?'?'?' \\ ??? \end{matrix} \xrightarrow{EOTF} \right\} ??? \xrightarrow{\text{Konversion}} \mathrm{XYZ} \xrightarrow{\text{3x3 Matrix}} \mathrm{LMS} \xrightarrow{\text{PQ-OETF}} \mathrm{L'M'S'} \xrightarrow{\text{3x3 Matrix}} \mathrm{IC_TC_P} \xrightarrow{\text{Kart.-Pol.}} \mathrm{ICH}$$

Die Ausgangsbasis für die Berechnung von ICH ist immer das CIE-XYZ Farbformat. Jegliche eingangsseitig verwendete Farbrepräsentation muss während der Umwandlung nach CIE-XYZ gewandelt werden. Bei Eingangssignalen mit unbekanntem Signalformat "?'" muss deshalb darauf geachtet werden, dass eine Umwandlung zunächst nach CIE-XYZ möglich ist.

Alle Wandlungen erfolgen unter Berücksichtigung des Farbgamuts und der OETF. Im Detail bedeutet das, dass je nach Farbgamut des Eingangssignals eine andere Umwandlungsmatrix angewandt werden muss. Analog muss die Entzerrung verzerrter Eingangssignale immer mit der inversen Verzerrungskurve (EOTF) erfolgen. Die CL-Farbrepräsentation $IC_TC_P$ und die zugehörige Polarkoordinatendarstellung ICH ist als beispielhaft zu verstehen. Das erfindungsgemäße Verfahren ist nicht auf diese Farbrepräsentationen limitiert. Diese sind durch andere CL- Farbrepräsentationen ersetzbar.

Anschließend wird der Quell- und Zielfarbraum festgelegt. Diese beiden Farbräume stellen Teilmengen der Transformationsfarbrepräsentation dar und beschreiben die Farbvolumina, zwischen denen eine Transformation stattfinden soll. Der Zielfarbraum ist in der Regel in allen Dimensionen kleiner als der Quellfarbraum. Quell- und Zielfarbraum ergeben sich aus der Kombination aus Quell- und Zielfarbgamut und Quell- und Ziel-EOTF und bilden dadurch dreidimensionale Gebilde in der Transformationsfarbrepräsentation. Für den QFR und den ZFR werden Stützstellen errechnet, die den jeweiligen Farbumfang vollständig beschreiben. Die Stützstellen werden in der Farbrepräsentation RGB festgelegt und dann mit Hilfe der Wandlungsformel für RGB-Eingangssignale in die Transformationsfarbrepräsentation als kartesische Koordinaten gewandelt. Es folgt eine Einteilung des Quell- und Zielfarbraumes in einzelne Bunttonblätter. Eine geeignete Menge an Bunttonblättern ist mindestens 360. Dies ist damit begründet, dass der Bunttonwinkel (Hue) von ICH in Grad angegeben wird. Ein Kreis lässt sich dabei in beliebig viele Bunttonblätter einteilen. Eine Einteilung in mindestens 360 Bunttonblätter ist ausreichend, da dann je Winkel von 1° ein Bunttonblatt zugeordnet wird. Genauere Einteilungsskalen sind theoretisch anwendbar, führen aber durch zu kleinen Schrittweiten zwischen den Werten des Bunttonwinkels nicht zwingend zu genaueren Ergebnissen, sondern eher zu erhöhtem Rechenaufwand.

## II. Berechnung Farbraumgrenzen

**IIa)** In einem zweiten Schritt erfolgt in einem Schritt IIa die Berechnung der Farbraumgrenzen des Quell- und Zielfarbraumes, die in Schritt I festgelegt wurden. Die Farbraumgrenzen ergeben sich durch die äußerste Umrandung/Grenze aller berechneten Stützstellen, die in Schritt I bestimmt wurden, und sind von elementarer Bedeutung

für weitere Berechnungsschritte. Jede Stützstelle der Farbraumgrenze ist durch drei Koordinaten charakterisiert. Dies sind der Helligkeitswert I und die beiden Farbwerte $C_T$ und $C_P$. Durch Umwandlung der Stützstellen in das ICH-Farbformat, lassen sich die Stützstellen nach Bunttonwinkeln (H) sortieren. Durch diese Sortierung ist es möglich, dass in jedem einzelnen Bunttonwinkel eine Farbraumgrenze des Quell- und Zielfarbraumes festgelegt werden kann. Diese Grenzen beschreiben dann auf zweidimensionaler Basis (Helligkeit und Chromatizität), welche Helligkeitswerte bei welchen Chromatizitätswerten im jeweiligen Farbraum je Bunttonwinkel zulässig sind. Die Darstellung der Farbraumgrenzen in der beschriebenen Form dienen als Ausgangslage für die weitere Farbortverschiebung.

**IIb)** In einem Schritt IIb wird eine Soft-Clipping Farbraumgrenze des Zielfarbraumes, der in Schritt I festgelegt wurde, festgelegt. Diese bestimmt sich durch den Soft-Clipping Faktor. Damit wird die Eindringtiefe der (später folgenden) Schnittpunktberechnung in den Zielfarbraum festgelegt. Der Soft-Clipping-Faktor wird als Prozentwert angegeben. Er beschreibt die prozentuale Größe der Soft-Clipping-Farbraumgrenze in Relation zur Zielfarbraumgrenze. Spezifisch bedeutet das, dass ein Soft-Clipping-Wert von bspw. 0.95 einer um 5% verkleinerten Soft-Clipping Farbraumgrenze in Relation zur Zielfarbraumgrenze entspricht. Die Soft-Clipping Farbraumgrenze berechnet sich durch Multiplikation jeder Stützstelle der Zielfarbraumgrenze, die in Schritt IIa festgelegt wurden, mit dem Soft-Clipping Faktor. Die Berechnung auf Basis der ICH-Werte der Stützstellen erlaubt erneut eine Darstellung der Soft-Clipping Farbraumgrenze je Bunttonblatt, die für die weitere Farbortverschiebung essenziell ist.

**IIc)** In einem Schritt IIc wird je Bunttonblatt der Cusp-Punkt ausgelesen. Der Cusp-Punkt wird durch den Punkt im Bunttonblatt dargestellt, an der größtmöglichen Sättigung bei gleichzeitig größtmöglicher Helligkeit vorliegt.

**IId)** Anschließend erfolgt in einem Schritt IId die Berechnung des zweidimensionalen, relativen Abstandes des Farbortes zwischen Quellfarbraumgrenze und Zielfarbraumgrenze. Wenn der eingehende Farbort außerhalb der Zielfarbraumgrenze und innerhalb der Quellfarbraumgrenze liegt, wird ein relativer Abstand bestimmt. Mit Hilfe dieses Abstandes lässt sich ein Verschiebungsvektor bestimmen. Der Verschiebungsvektor verschiebt den eingehenden Farbort in Bezug auf seinen Bunttonwinkel so, dass die Bunttonwinkel von Quell- und Zielfarbraum je Farbton angeglichen sind. Dieser Berechnungsschritt ist nötig, damit transformierte Farborte ihren Farbton beibehalten und beispielsweise nicht vom blauen Farbbereich in den hellblauen oder lila Farbbereich verschoben werden. Die Ursache der Notwendigkeit dieser Verschiebung ist damit begründet, dass Farbräume unterschiedlicher Größe in derselben Farbrepräsentation dazu neigen, ein maximal gesättigtes Rot, Grün oder Blau bei unterschiedlichen Winkelwerten darzustellen. Ein voll gesättigtes Rot entspricht beispielsweise in Rec.2100-PQ einem anderen Winkelwert, als ein voll gesättigtes Rot in Rec.709-Gamma. Der jeweils zugehörige RGB-Wert für Rot ([1 0 0]) ist aber derselbe.

**III. Berechnung Bunttonverschiebungsvektoren**

**IIIa)** In einem dritten Schritt erfolgt in einem Schritt IIIa die Berechnung aller Bunttonverschiebungsvektoren für die Kombination aus Quell- und Zielfarbgamut (zweidimensional, in Schritt I festgelegt) auf Grundlage der Primär- und Sekundärvalenzen der jeweiligen Farbräume. Die Primärvalenzen entsprechen immer den vollgesättigten Farborten von Rot, Grün und Blau, während die Sekundärvalenzen immer den vollgesättigten Farborten für Cyan, Magenta und Gelb entsprechen. Die Werte der Farborte der Primär- und Sekundärvalenzen im Transformationsfarbraum bestimmen sich durch die Umwandlung folgender RGB-Werte in den Transformationsfarbraum:

| Farbe | RGB-Wert | ICH (Rec.2100-PQ) | ICH (Rec.709 Gamma) |
|---|---|---|---|
| Rot | [ 1 0 0 ] | [ 2617 0.4989 113] | [ 22.62 0.2779 112] |
| Grün | [ 0 1 0 ] | [ 6142 0.4864 194] | [ 68.33 0.2684 190] |
| Blau | [ 0 0 1 ] | [ 0851 0.4125 313] | [ 10.75 0.2932 330] |
| Cyan | [ 0 1 1 ] | [ 6997 0.1671 259] | [ 78.11 0.0800 266] |
| Magenta | [ 1 0 1] | [ 3646 0.3898 037] | [ 33.11 0.2572 027] |
| Gelb | [1 1 0] | [ 9112 0.3984 172] | [ 91.10 0.2398 171] |

Die Tabelle verdeutlicht, wie unterschiedlich die Winkelwerte des jeweiligen Bunttonwinkels zwischen zwei Farbräumen unterschiedlicher Größenausprägung in derselben Farbrepräsentation sein können. Ein vollgesättigtes Blau entspricht

in Rec.709-Gamma einem Bunttonwinkel von 330°, während ein vollgesättigtes Blau in Rec.2100-PQ einem Bunttonwinkel von 313° entspricht.
Durch die Umwandlung dieser RGB-Werte sind 6 Farborte für den Quell- und Zielfarbraum bekannt. Daraus lassen sich 6 Verschiebungsvektoren für 6 unterschiedliche Bunttonwinkel errechnen. Die Verschiebungsvektoren für die verbliebenen 354 Bunttonwinkel (360-6) werden beispielsweise linear interpoliert.
**IIIb)** Danach erfolgt in einem Schritt IIIb die Verschiebung des Bunttonwinkels eines eingehenden Farbortes. Der Bunttonwinkel des eingehenden Farbortes wird dazu um den Grad des relativen Abstandes, der in Schritt IId berechnet wurde, multipliziert mit dem Verschiebungswert für den Bunttonwinkel des Farbortes verschoben. Der Buntton-spezifische Verschiebungswert wird aus den in Schritt IIIa berechneten Verschiebungswerten für alle Bunttonwinkel ausgelesen. Daraus resultiert eine Verschiebung der Form: Umso weiter entfernt ein Farbort vom Zielfarbgamut ist, desto stärker wird dieser in seinem Bunttonwinkel verschoben. Der Zweck dieser relativen Verschiebung besteht darin, sprunghafte Änderungen der Verschiebungsvektoren zu vermeiden. Dies könnte (ohne Bunttonwinkelverschiebung) beispielsweise für Farborte, die knapp außerhalb der Grenze des Zielfarbraumes liegen, passieren. Zum weiteren Verständnis sind Verschiebungsvektoren für den Quellfarbraum ITU-R BT.2020/ ITU-R BT.2100-PQ und den Zielfarbraum ITU-R BT.709/ITU-R BT.1886 in Abbildung 7 zu finden. Die hier angegebenen Quell- und Zielfarbgamuts und -EOTFs sind als beispielhaft zu verstehen und sind prinzipiell durch jegliche andere Gamuts und EOTFs ersetzbar.

**IV. Transformation auf Basis geometrischer Schnittpunkt-Berechnungen**

**IVa)** In einem vierten Schritt erfolgt in einem Schritt IVa zunächst die Berechnung der Regressionskurve auf Grundlage der zweidimensionalen Position im Bunttonblatt des eingehenden Farbortes nach der Bunttonwinkelverschiebung.
Die Regressionskurve hat die Form einer Exponentialkurve mit variablem Exponenten. Die Aufstellung der Kurve erfolgt durch Berechnung eines relativen Steigungswertes. Der relative Steigungswert variiert, je nachdem in welchem Mapping-Bereich sich der eingehende Farbort befindet (siehe Abbildung Fig.2). Weiterhin fließt in die Berechnung des relativen Steigungswertes die zweidimensionale Position im Bunttonblatt (Zahlenwerte) des Cusp-Punktes, der in Schritt IIc ausgelesen wurde, ein. So ist eine positionsabhängige und damit adaptive Steigungsberechnung gegeben. Für eingehende Farborte mit sehr großem Sättigungswert, werden zusätzliche Berechnungsvorschriften angewandt. Die Kurvensteigung wird für diese Farborte zusätzlich erhöht, damit die Farborte durch die nachfolgende Schnittpunktberechnung nicht zu dunkel werden. Bei extrem großem Sättigungswert des eingehenden Farbortes findet eine adaptive, konditionelle Mischung des gemappten Farbortes mit seinem geclippten Pendant statt. Dies sorgt dafür, dass stark gesättigte Bildinhalte zwar transformiert werden, aber der "Glanz", der durch ausschließliches Clipping entstehen würde, zu einem gewissen Grad erhalten bleibt.
Die Berechnung erfolgt weiterhin für verschiedene Farborte unterschiedlich, je nachdem ob ihr Helligkeitswert größer, gleich oder kleiner als der Referenzhelligkeitswert ist. Die verschiedenen Bereiche 1 bis 5 zeigt die Abbildung Fig.2. Ein Referenzhelligkeitswert wird verwendet, um eine genauere Unterscheidung eingehender Farborte zu ermöglichen. Es kann vorkommen, dass eingehende Farborte eine negative Helligkeit haben. Obwohl ein solcher Farbort physikalisch nicht darstellbar ist, so kann er doch Relevanz im Bild besitzen und muss deshalb zwingend mit einer positiven Helligkeit versehen werden. Der Referenzhelligkeitswert separiert einen Bereich des Zielfarbraumes für die Transformation eingehender Farborte mit Helligkeitswerten kleiner des Referenzhelligkeitswertes. Dies schließt eingehende negative Helligkeitswerte ein. Die zugehörigen Bereiche sind Bereich 4 und 5 in Abbildung Fig.2. Für alle 5 Bereiche werden unterschiedliche Berechnungsterme für die Berechnung der Regressionskurve angewandt. Damit eingehenden Farborten in Bereich 4 und 5 nach der Transformation positive Helligkeitswerte zugeordnet werden können, muss die Kurvenberechnung für diese Bereiche invers zu den Berechnungsvorschriften in den Bereichen 1-3 erfolgen. Der eigentliche Referenzwert ist zunächst willkürlich gewählt. Der Report ITU-R BT.2408 schlägt einen Referenzwert für eine PQ-Produktion von 0.38 vor. Dies entspricht einer Helligkeit von 26 $cd/m^2$, die aber für den vorliegenden Fall wesentlich zu hoch, da zu nah am Cusp-Punkt, ist. Deshalb wurde der Wert an die allgemeingültige Referenz einer Graukarte angelehnt. Eine Graukarte reflektiert ca. 18% des einfallenden Lichts. Der hier gewählte Referenzwert entspricht einer 18%igen Aussteuerung des PQ-Signals.

**IVb)** In einem Schritt IVb erfolgt die Schnittpunktberechnung der Regressionskurve, die in Schritt IVa errechnet wurde, mit der passenden Zielfarbraumgrenze. Der zuvor bestimmte, relative Abstand des eingehenden Farbortes zwischen Quell- und Zielfarbraumgrenze (Schritt IId) wird in diesem Schritt auf den Abstand zwischen Zielfarbraumgrenze und Soft-Clipping Farbraumgrenze, die in Schritt IIb festgelegt wurde, übertragen. Es wird so eine neue Farbraumgrenze berechnet. Diese nennt sich Soft-Clipping Mapping Farbraumgrenze. Diese Grenze wird spezifisch für jeden Farbort bestimmt, während alle anderen Grenzen einmal je Bunttonblatt bestimmt werden. Die Soft-Clipping

Mapping Farbraumgrenze beschreibt demnach den relativen Farbabstand des eingehenden Farbortes zwischen Quell- und Zielfarbraumgrenze im Bereich zwischen Zielfarbraumgrenze und Soft-Clipping Farbraumgrenze (siehe Punkt 4.1 in Fig. 4). Alle Abstandsberechnungen erfolgen immer mittels der Schnittpunkte der Regressionskurven mit den zugehörigen Farbraumgrenzen. Der so übertragene relative Abstand sorgt dafür, dass die relative Position eines eingehenden Farbortes in den Bereich zwischen Soft-Clipping Farbraumgrenze und Zielfarbraumgrenze übertragen wird. Die relative Position ist hier gegeben durch die Position des Farbortes in Abhängigkeit der Quell- und Zielfarbraumgrenze des jeweiligen Bunttonblattes. Die Position wird nicht absolut, sondern bezugnehmend auf die Grenzen angegeben.
Der Schnittpunkt der Regressionskurve mit dieser Farbraumgrenze stellt den transformierten Farbort dar. Durch die Variabilität des Soft-Clipping Faktors lässt sich steuern, wie weit außerhalb des Zielfarbraumes liegende Farborte in diesen eindringen sollen.

### V. Wandlung der transformierten Farborte in die Zielfarbrepräsentation

Anschließend erfolgt in einem Schritt V die Konversion des transformierten Farbortes, der in Schritt IVb errechnet wurde, in die Zielfarbrepräsentation.

Der Farbort im Transformationsfarbraum befindet sich durch die Verschiebung auf der Regressionskurve nun im zulässigen Farb- und Helligkeitsumfang des Zielfarbraumes. Dieser Vorgang der Transformation wird für alle Farborte eines Bildes durchgeführt. Farborte die schon im Zielfarbraum liegen, benötigen keine Transformation und werden unverändert durch die Verarbeitungskette hindurch gegeben. Die Wandlung aus dem Transformationsfarbraum in die Zielfarbrepräsentation erfolgt mit nachfolgender Wandlung:

$$ICH \xrightarrow{Pol.-Kart.} IC_TC_P \xrightarrow{3x3\ Matrix} L'M'S' \xrightarrow{PQ-EOTF} LMS \xrightarrow{3x3\ Matrix} XYZ \xrightarrow{3x3\ Matrix} ZFR$$

Die CL-Farbrepräsentationen ICH und $IC_TC_P$ sind durch jede andere CL-Farbrepräsentation ersetzbar und sind für das erfindungsgemäße Verfahren nicht als Limitation zu sehen. Die Wandlung erfolgt in inverser Reihenfolge aus dem Transformationsfarbraum (zB ICH) zurück nach CIE XYZ. Dieses Farbformat lässt sich dann in ein beliebiges weiteres Farbformat wandeln (z.B. RGB).

Nur eine mathematisch richtig dargestellte Farbe lässt sich (so gut wie) fehlerfrei transformieren. Gegenüber bereits bestehenden Algorithmen besteht der Vorteil darin, durch die Verwendung eines CL-Farbraumes auch HDR-Helligkeiten und WCG-Farben darstellen zu können. Damit ist es möglich, HDR-WCG-Bilder in der Form zu SDR-SCG-Bildern zu konvertieren, sodass der Bildeindruck derselbe bleibt. Die Referenz bietet dabei immer das menschliche Auge, dass die Bildbeurteilung bei der Aufnahme (Kamera) und bei der Wiedergabe (Display) durchführt. Dies ist nur dann möglich, wenn die mathematische Farbrepräsentation in einem Containerformat erfolgt, dass die Kennlinien der Helligkeits- und Farbwahrnehmung des Auges berücksichtigt und ausreichend groß ist, um alle (für HDR wichtigen) Farben zu erfassen. Von einem solchen Containerformat wird im erfindungsgemäßen Verfahren Gebrauch gemacht. Die Vorteile des Verfahrens bestehen darin, dass größere Differenzen zwischen Quell- und Zielfarbräumen wahrnehmungsgetreu kompensiert werden können, als dies mit bestehenden Verfahren möglich ist. Eine Kompensation größerer Differenzen zwischen Quell- und Zielfarbräumen wird in Zukunft immer mehr benötigt werden, da die Fähigkeit von Kameras, große Farbräume aufzuzeichnen bereits sehr gut realisiert ist, während die Entwicklung von Wiedergabedisplays, die große Farbräume anzeigen können, im Mittel nicht so schnell voranschreiten wird. Weiterhin ist der Lebenszyklus eines Wiedergabedisplays (TV) groß, da der Durchschnittskonsument nicht innerhalb kurzer Zeitabstände neue Geräte erwerben wird.

Dies rechtfertigt die Entwicklung von Verfahren, Algorithmen und Produkten, die generell dazu dienen HDR-WCG-Bildmaterial auch auf SDR-SCG- Wiedergabegeräten akkurat wiederzugeben. Bildverarbeitungsketten müssen in der absehbaren Zukunft darauf ausgerichtet sein, parallel zu Sendesignalen mit großem Farb- und Helligkeitsumfang (HDR-WCG) auch Sendesignale mit kleinerem Farb- und Helligkeitsumfang (SDR-SCG) auszugeben. Das erfindungsgemäße Verfahren kann in verschiedenen Formen implementiert sein. Eine alternative Implementierung umfasst die Ausführungsschritte 1-5 und kann in der Form einer Lookup-Table (LUT) oder einer geschlossenen Funktion aufgebaut sein. Für die Implementierungsform der LUT werden alle Eingangsfarborte des Quellfarbraums im Voraus festgelegt. Für jeden Eingangsfarbort wird der transformierte Farbort berechnet. Die transformierten Farborte werden in einer Tabelle abgespeichert. Die zugehörigen Eingangsfarborte sind implizit durch die Reihenfolge der Werte in der Tabelle gegeben. Die Anzahl der abgespeicherten Werte variiert je nach Größe der Lookup-Table. Gängig sind LUT-Größen von 17x17x17 Wertetripel bis zu 65x65x65 Wertetripel, selten bis zu 129x129x129 Wertetripel. Je höher die Anzahl der zu transformierenden Werte, desto höher ist die Verarbeitungsdauer für die Vorberechnung. Genau diese lange Verarbeitungsdauer wird bei dem eigentlichen Anwenden des Transformationsverfahrens, durch die Anwendung einer LUT,

eingespart. Das Auslesen der passenden Werte aus einer vorberechneten Wertetabelle kann wesentlich schneller und weniger rechenintensiv erfolgen, als es die direkte Berechnung eines transformierten Farbortes zulassen würde. Für das erfindungsgemäße Verfahren können 3D-LUTs verwendet werden, da für jeden Farbort jeweils 3 Werte angegeben werden müssen. 3D-LUTs können Anwendung auf Basis von RGB-Signalen finden. Dies bedeutet für das erfindungsgemäße Verfahren, dass der Eingabe- und Ausgabefarbraum ein spezifischer RGB-Farbraum, bzw. eine RGB-Farbrepräsentation ist. Für jede mögliche Kombination aus Eingabe- und Ausgabefarbraum wird eine 3D-LUT im Voraus berechnet. Diese Art der Implementierung bietet sich für die kommerzielle Verwendung des Verfahrens an. Die Verfahrensmethodik wird durch die Vorberechnung nicht offengelegt und der potenzielle Kunde erhält wenigstens eine Wertetabelle, die sich für die direkte Anwendung eignet.

Eine weitere Implementierungsmethode des erfindungsgemäßen Verfahrens ist durch die Ausführung einer geschlossenen Funktion gegeben. Diese Methode eignet sich nur für sehr performante Bildverarbeitungssysteme, da alle Berechnungen in (nahezu) Echtzeit ausgeführt werden müssen. Die Berechnung eines transformierten Farbortes wird für jeden eingehenden Farbort separat ausgeführt. Die Stützstellen der Farbraumgrenzen können jedoch auch hier vorberechnet werden.

**Ausführungsbeispiele**

Unter Zuhilfenahme von Fig. 4 wird im Folgenden die Wandlung eines konkreten Farbortes exemplarisch dargestellt. Die Abbildung Fig 5 und Fig.6 zeigen alternative konkrete Ausführungsbeispiele. Fig. 4 stellt als Quellfarbraum ITU-R BT.2100 (Gamut) und ITU-R BT.2100-PQ (EOTF) dar. Als Zielfarbraum dient ITU-R BT.709 (Gamut) und ITU-R BT.1886 (EOTF). Der eingehende Farbort liegt im HDR-WCG-Format PQ-2100 vor und hat folgende RGB-Werte:

$$RGB_{HDR} = [0.5614\ 0.3525\ 0.6422]$$

Nach der Konversion des eingehenden Farbortes in den Transformationsfarbraum hat dieser folgende ICH-Werte:

$$ICH_{HDR} = [0.5\ 0.29\ 15]$$

Aus der Abbildung Fig.4 geht hervor, dass der eingehende Farbort (rechter Stern) außerhalb der Zielfarbraumgrenze liegt. Deswegen muss dieser transformiert werden, um im zulässigen Wertebereich des Zielfarbraumes zu liegen. Der eingehende Farbort liegt im Mapping-Bereich 2. (Die allgemeine Anordnung der Mapping-Bereiche ist in Fig.2 gezeigt.) Die berechnete Mapping-Kurve ist durch die gestrichelte Linie dargestellt. Aufgrund der zweidimensionalen Lage des eingehenden Farbortes in Relation zum Quell- und Zielfarbgamut (zweidimensional) ergibt sich eine Bunttonwinkelverschiebung von -1°. Diese Verschiebung wird auf den Bunttonwinkel des Quellbunttonblattes angewandt. Nachfolgend wird der relative Abstand zwischen Farbort und Quell- und Zielfarbraumgrenze bestimmt. Dieser Abstand wird auf den Abstand zwischen Soft-Clipping Farbraumgrenze und Zielfarbraumgrenze übertragen und mit dessen Hilfe schlussendlich die Soft-Clipping Mapping Farbraumgrenze (4.1 in

Fig. 4) bestimmt. Der Schnittpunkt zwischen Regressionskurve und Soft-Clipping Mapping Farbraumgrenze (linker Stern) ist der transformierte Farbort. Nach der Transformation besitzt dieser folgende Werte im Transformationsfarbraum:

$$ICH_{SDR} = [0.4102\ 0.1395\ 14]$$

Die Konversion aus dem Transformationsfarbraum in den Zielfarbraum (z.B. RGB) ergibt folgende Werte:

$$RGB_{SDR} = [0.7987\ 0.4388\ 0.9068]$$

Die Werte für $RGB_{HDR}$ und $RGB_{SDR}$ sind jedoch nicht direkt vergleichbar. (Verzerrte) RGB-Werte haben in der Regel alle denselben Wertebereich (0 bis 1), repräsentieren aber jeweils andere Farbgamuts in Verbindung mit unterschiedlichen EOTFs. $RGB_{HDR}$ repräsentiert PQ 2100 HDR-Werte, während $RGB_{SDR}$ Gamma-709 SDR-Werte repräsentiert. Eine korrekte Darstellung dieser Werte ist jeweils nur auf Bildschirmen möglich, die die jeweiligen Standards unterstützen.

**Abbildungslegenden und Bezugszeichenliste**

**Fig.1** zeigt den Sättigungswert (saturation) pro Bunttonwinkel. Die Sättigungswerte wurden durch eine iterative Testprozedur ermittelt. Jedem Bunttonwinkel mit einer Schrittweite von einem Grad wird ein Sättigungswert zwischen 0 und 100 zugeordnet. (1.X) entspricht dem Bunttonwinkel, (1.Y) entspricht dem Sättigungswert.

**Fig.2** zeigt eine Darstellung der Mapping-Bereiche am Beispiel von der Farbrepräsentation PQ Rec.2100 als QFR und Gamma Rec.709 als ZFR. Farborte werden in die Bereiche 1-5 eingeteilt. Die Bereiche 4 und 5 umfassen auch negative Werte auf der Helligkeitsachse. Farborte mit negativer Helligkeitskomponente werden demnach den Bereichen 4 und 5 zugeordnet. (2.X) entspricht dem Chromatizitätswert (C von ICH), (2.Y) entspricht der Helligkeit (I von ICH), (1-5) entspricht den Mapping-Bereichen 1-5.

**Fig.3** zeigt erneut eine Darstellung zweier Bunttonblätter eines Quell- und eines Zielfarbraumes. Die Lage der Cusp-Punkte und die Lage der Referenzhelligkeit wird durch diese Abbildung verdeutlicht. (3.X) entspricht dem Chromatizitätswert (C von ICH), (3.Y) entspricht der Helligkeit (I von ICH), (3.1) entspricht dem Cusp-Punkt des Quellfarbraumes, (3.2) entspricht der Quellfarbraumgrenze, (3.3) entspricht dem Cusp-Punkt des Zielfarbraumes, (3.4) entspricht der Zielfarbraumgrenze, (3.5) entspricht der Referenzhelligkeit, die für die Berechnung der Steigungswerte der Mapping-Kurven verwendet wird.

**Fig.4** zeigt einen spezifischen Anwendungsfall der Farbraumtransformation für den Eingangsfarbort $ICH_{in}$ = [0.5 0.29 15].

> Quellfarbraum: ITU-R BT.2100 (Gamut), ITU-R BT.2100-PQ (EOTF)
> Zielfarbraum: ITU-R BT.709 (Gamut), ITU-R BT.1886 (EOTF)
> (4.X) entspricht dem Chromatizitätswert (C von ICH), (4.Y) entspricht der Helligkeit (I von ICH), (4.1) entspricht der Softclipping-Mapping Farbraumgrenze, (4.2) entspricht dem transformierten Farbort, (4.3) entspricht dem eingehenden Farbort, (4.4) entspricht der Quellfarbraumgrenze, (4.5) entspricht der Zielfarbraumgrenze, (4.6) entspricht der Softclipping Farbraumgrenze.

**Fig.5** zeigt einen spezifischen Anwendungsfall der Farbraumtransformation für den Eingangsfarbort $ICH_{in}$ = [0.5 0.31 15].

> QFR: ITU-R BT.2100 (Gamut), ITU-R BT.2100-PQ (EOTF)
> ZFR: ITU-R BT.709 (Gamut), SLOG3 (EOTF)
> (5.X) entspricht dem Chromatizitätswert (C von ICH), (5.Y) entspricht der Helligkeit (I von ICH), (5.1) entspricht der Quellfarbraumgrenze, (5.2) entspricht dem eingehenden Farbort, (5.3) entspricht dem transformierten Farbort, (5.4) entspricht der Zielfarbraumgrenze, (5.5) entspricht der Softclipping-Mapping Farbraumgrenze, (5.6) entspricht der Softclipping Farbraumgrenze.

**Fig.6** zeigt einen spezifischen Anwendungsfall der Farbraumtransformation für den Eingangsfarbort $ICH_{in}$ = [0.5 0.31 15].

> QFR: ITU-R BT.2100 (Gamut), ITU-R BT.2100-HLG (EOTF)
> ZFR: ITU-R BT.709 (Gamut), ITU-R BT.1886 (EOTF)
> (6.X) entspricht dem Chromatizitätswert (C von ICH), (6.Y) entspricht der Helligkeit (I von ICH), (6.1) entspricht dem eingehenden Farbort, (6.2) entspricht dem transformierten Farbort, (6.3) entspricht der Quellfarbraumgrenze, (6.4) entspricht der Zielfarbraumgrenze, (6.5) entspricht der Softclipping-Mapping Farbraumgrenze, (6.6) entspricht der Softclipping Farbraumgrenze.

**Fig.7** zeigt mögliche Verschiebungsvektoren in zweidimensionaler Ansicht mit dem Quellfarbgamut (ITU-R BT.2100) und dem Zielfarbgamut (ITU-R BT.709). Die Verschiebungsvektoren werden in Schritt III berechnet.
(7.X) entspricht dem kartesischen Farbwert $C_T$ von $IC_TC_P$, (7.Y) entspricht dem kartesischen Farbwert $C_P$ von $IC_TC_P$, (7.1) entspricht der Quellfarbraumgrenze, (7.2) entspricht der Zielfarbraumgrenze.

**Fig.8** zeigt den Vorgang der Extraktion der Bunttonblätter aus einem HDR-Farbraum (Quellfarbraum) und einem SDR-Farbraum (Zielfarbraum). Dieser Vorgang verdeutlicht den Übergang von einer 3D-Darstellung zu einer 2D-Darstellung.
(8.1) entspricht der Extraktion eines Bunttonblattes aus einer Pluralität von Bunttonblättern in einem Quellfarbraum, (8.2) entspricht der Extraktion eines Bunttonblattes aus einer Pluralität von Bunttonblättern in einem Zielfarbraum, (8.3) und (8.4) zeigen die Überlagerung des extrahierten Bunttonblattes des Quell- und Zielfarbraumes für einen bestimmten Bunttonwinkel.

**Fig.9** zeigt exemplarisch zweidimensionale Farbgamuts. Die Darstellung erfolgt in der Farbrepräsentation CIE1931 Yxy und zeigt Farbgamuts, die zum jetzigen Zeitpunkt die gängigsten sind.
(9.X) entspricht dem kartesischen Farbwert x von CIE 1931 Yxy, (9.Y) entspricht dem kartesischen Farbwert y von CIE 1931 Yxy, (9.1) entspricht dem Farbgamut Rec.2100 nach ITU-R BT.2100, (9.2) entspricht dem Farbgamut Rec.709 nach ITU-R BT.709, (9.3) entspricht dem Farbgamut Rec.601 nach ITU-R BT.601, (9.4) entspricht dem Farbgamut DCI P3 nach SMPTE EG 432-1 und SMPTE EG 432-2, (9.5) entspricht dem Farbgamut Aces AP0 nach SMPTE ST 2065-1:2012, (9.6) entspricht dem Farbgamut Sony S-Gamut 3, (9.7) entspricht dem Farbgamut Arri Alexa Wide Gamut, (9.8) entspricht dem Farbgamut Panasonic V-Gamut, (9.9) entspricht dem Farbgamut Canon Cinema Gamut.

## Patentansprüche

1. Verfahren zur Farbraumtransformation wenigstens eines Bildes oder einer Bildfolge aus einem Quellfarbraum in einen Zielfarbraum umfassend folgende Schritte:

   I. Festlegen einer Transformationsfarbrepräsentation, wobei eine Constant-Luminance Farbrepräsentation als Transformationsfarbrepräsentation verwendet wird
   II. Festlegen des Quell- und Zielfarbraumes und Berechnung von Stützstellen, wobei diese Stützstellen den jeweilig erreichbaren Maximalumfang im Quell- und Zielfarbraum beschreiben
   III. Konversion der Farborte aller Stützstellen in die Transformationsfarbrepräsentation
   IV. Berechnung von Farbraumgrenzen in dreidimensionaler Darstellung für den Quellfarbraum und den Zielfarbraum in der Transformationsfarbrepräsentation als äußerste Grenze aller konvertierten Stützstellen, wobei die dreidimensionale Darstellung dabei durch die Dimensionen Helligkeit, Chromatizität und Bunttonwinkel aufgespannt wird
   V. Sortieren von dreidimensionalen Farbraumgrenzen nach Bunttonwinkeln, Zuweisen der Farbraumgrenzen zu einzelnen Bunttonwinkeln und Einteilung des Quell- und Zielfarbraumes in einzelne Bunttonblätter
   VI. Festlegen eines Soft-Clipping Faktors und Berechnung einer Soft-Clipping Farbraumgrenze mittels des Soft-Clipping Faktors und der Farbraumgrenze des Zielfarbraumes
   VII. Bestimmung von Cusp-Punkten in den einzelnen Bunttonblättern des Quell- und Zielfarbraumes
   VIII. Berechnung eines relativen Abstandes zwischen der Grenze des Quellfarbraumes, der Grenze des Zielfarbraumes und einem jeweiligen Eingangsfarbort
   IX. Berechnung von Verschiebungsvektoren für die Kombinationen aus Quellfarbraum und Zielfarbraum mit Hilfe der jeweiligen Primär- und Sekundärvalenzen aus Quellfarbraum und Zielfarbraum
   X. Anwenden des passenden Verschiebungsvektors aus Schritt IX auf den Wert des Bunttonwinkels eines Eingangsfarborts, wobei dieser Verschiebungsvektor mit dem berechneten, relativen Abstand gewichtet wird
   XI. Bestimmung der Regressionskurve mittels Berechnung eines von Helligkeit und Sättigung des Eingangsfarbortes und Helligkeit und Sättigung des Cusp-Punkt des jeweiligen Bunttonblattes abhängigen Steigungswertes und Streckungsfaktors
   XII. Bestimmung einer Soft-Clipping-Mapping Farbraumgrenze durch Übertragung des relativen Abstandes des Eingangsfarborts zwischen Quell- und Zielfarbraumgrenze auf den Abstand zwischen Farbraumgrenze des Zielfarbraums und Soft-Clipping-Mapping-Farbraumgrenze
   XIII. Bestimmung des transformierten Farbortes für den Eingangsfarbort durch Schnittpunktberechnung der Regressionskurve mit der Soft-Clipping-Mapping Farbraumgrenze und
   XIV. Konversion transformierter Farborte in die Zielfarbrepräsentation, sodass das Bild oder die Bildfolge in einem Zielfarbraum vorliegen.

2. Verfahren nach Anspruch 1, **dadurch gekennzeichnet, dass** alle möglichen Eingangsfarborte des Quellfarbraums im Voraus festgelegt werden, dabei wird für jeden möglichen Eingangsfarbort der transformierte Farbort berechnet.

3. Verfahren nach Anspruch 1 oder 2, **dadurch gekennzeichnet, dass** die Berechnung des transformierten Farbortes für jeden eingehenden Farbort separat ausgeführt wird.

## Claims

1. Method for color space transformation of at least one image or image sequence from a source color space into a target color space comprising the following steps:

I. defining a transformation color representation, wherein a constant-luminance color representation is used as the transformation color space
II. defining the source and target color space and calculating interpolation points, whereby these interpolation points describe the respective maximum achievable gamut in the source and target color space
III. conversion of the color locations of all interpolation points into the transformation color representation
IV. Calculation of color space boundaries in three-dimensional representation for the source color space and the target color space in the transformation color representation as the outermost boundary of all converted interpolation points, whereby the three-dimensional representation is spanned by the dimensions of brightness, chromaticity and hue angle
V. Sorting three-dimensional color space boundaries according to hue angles, assigning color space boundaries to individual hue angles and dividing the source and target color space into individual hue sheets
VI. Determining a soft clipping factor and calculating a soft clipping color space boundary using the soft clipping factor and the color space boundary of the target color space
VII. determination of cusp points in the individual hue sheets of the source and target color spaces
VIII. Calculation of a relative distance between the boundary of the source color space, the boundary of the target color space and a respective input color location
IX. Calculation of displacement vectors for the combinations of source color space and target color space using the respective primary and secondary valences from source color space and target color space
X. Applying the appropriate displacement vector from step IX to the value of the chromaticity angle of an input chromaticity coordinate, weighting this displacement vector by the calculated relative distance
XI. Determination of the regression curve by calculating a slope value and stretch factor dependent on the brightness and saturation of the input chromaticity point and the brightness and saturation of the cusp point of the respective chromaticity sheet
XII. Determination of a soft-clipping mapping color space boundary by transferring the relative distance of the input chromaticity point between the source and target color space boundary to the distance between the color space boundary of the target color space and the soft-clipping mapping color space boundary
XIII Determination of the transformed chromaticity coordinate for the input chromaticity coordinate by intersection calculation of the regression curve with the soft clipping mapping color space boundary and
XIV. conversion of transformed color locations into the target color representation, so that the image or the image sequence is present in a target color space.

2. Method according to claim 1, **characterized in that** all possible input chromaticities of the source color space are determined in advance, the transformed chromaticity coordinates being calculated for each possible input chromaticity coordinate.

3. Method according to claim 1 or 2, **characterized in that** the calculation of the transformed chromaticity coordinates is carried out separately for each incoming chromaticity coordinate.

## Revendications

1. Méthode de transformation de l'espace colorimétrique d'au moins une image ou d'une séquence d'images d'un espace colorimétrique source vers un espace colorimétrique cible, comprenant les étapes suivantes :

I. définition d'une représentation des couleurs de transformation, une représentation des couleurs à luminance constante étant utilisée comme espace colorimétrique de transformation
II. définition de l'espace colorimétrique source et de l'espace colorimétrique cible et calcul des points d'interpolation, ces points d'interpolation décrivant la gamme maximale réalisable respective dans l'espace colorimétrique source et dans l'espace colorimétrique cible
III. conversion des emplacements des couleurs de tous les points d'interpolation dans la représentation des couleurs de transformation
IV. Calcul des limites de l'espace colorimétrique dans une représentation tridimensionnelle pour l'espace colorimétrique source et l'espace colorimétrique cible dans la représentation colorimétrique de transformation en

tant que limite extérieure de tous les points d'interpolation convertis, la représentation tridimensionnelle étant couverte par les dimensions de la luminosité, de la chromaticité et de l'angle de teinte.
V. Tri des limites de l'espace colorimétrique tridimensionnel en fonction des angles de teinte, attribution des limites de l'espace colorimétrique aux angles de teinte individuels et division de l'espace colorimétrique source et de l'espace colorimétrique cible en feuilles de teinte individuelles
VI. Détermination d'un facteur d'écrêtage doux et calcul d'une limite d'espace colorimétrique d'écrêtage doux à l'aide du facteur d'écrêtage doux et de la limite de l'espace colorimétrique de l'espace colorimétrique cible.
VII. détermination des points de cuspide dans les feuilles de teinte individuelles des espaces colorimétriques source et cible
VIII. Calcul d'une distance relative entre la limite de l'espace colorimétrique source, la limite de l'espace colorimétrique cible et un emplacement respectif de la couleur d'entrée.
IX. Calcul des vecteurs de déplacement pour les combinaisons de l'espace colorimétrique source et de l'espace colorimétrique cible à l'aide des valences primaires et secondaires respectives de l'espace colorimétrique source et de l'espace colorimétrique cible.
X. Application du vecteur de déplacement approprié de l'étape IX à la valeur de l'angle de chromaticité d'une coordonnée de chromaticité d'entrée, en pondérant ce vecteur de déplacement par la distance relative calculée.
XI. Détermination de la courbe de régression par le calcul d'une valeur de pente et d'un facteur d'étirement dépendant de la luminosité et de la saturation du point de chromaticité d'entrée et de la luminosité et de la saturation du point de cuspide de la feuille de chromaticité respective.
XII. Détermination d'une limite d'espace colorimétrique de mise en correspondance par écrêtage doux en transférant la distance relative du point de chromaticité d'entrée entre la limite de l'espace colorimétrique source et la limite de l'espace colorimétrique cible à la distance entre la limite de l'espace colorimétrique de l'espace colorimétrique cible et la limite de l'espace colorimétrique de mise en correspondance par écrêtage doux.
XIII. détermination de la coordonnée de chromaticité transformée pour la coordonnée de chromaticité d'entrée par le calcul de l'intersection de la courbe de régression avec la limite de l'espace colorimétrique de cartographie par écrêtage doux et
XIV. conversion des emplacements de couleur transformés en représentation de couleur cible, de sorte que l'image ou la séquence d'images soit présente dans un espace de couleur cible.

2. Méthode selon la revendication 1, **caractérisée par le fait que** toutes les chromatities d'entrée possibles de l'espace colorimétrique source sont déterminées à l'avance, les coordonnées chromatiques transformées étant calculées pour chaque coordonnée chromatique d'entrée possible.

3. Méthode selon la revendication 1 ou 2, **caractérisée par le fait que** le calcul des coordonnées de chromaticité transformées est effectué séparément pour chaque coordonnée de chromaticité entrante.

## Anhängende Zeichnungen

Fig.1

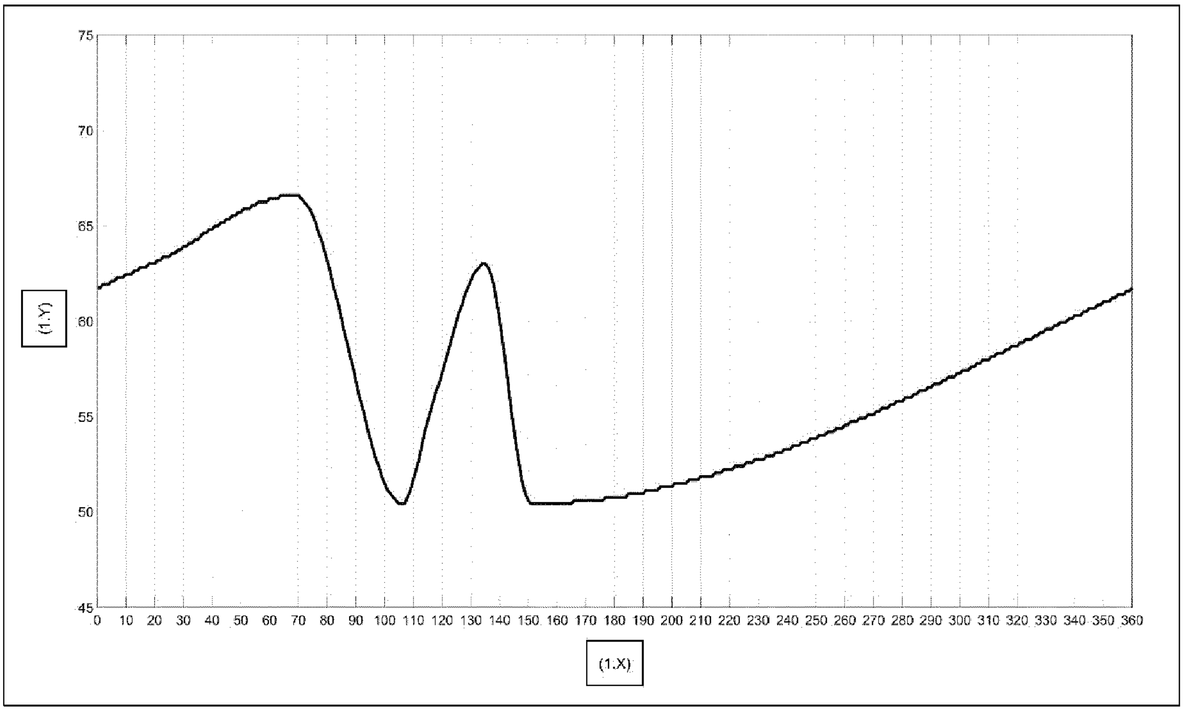

Fig. 2

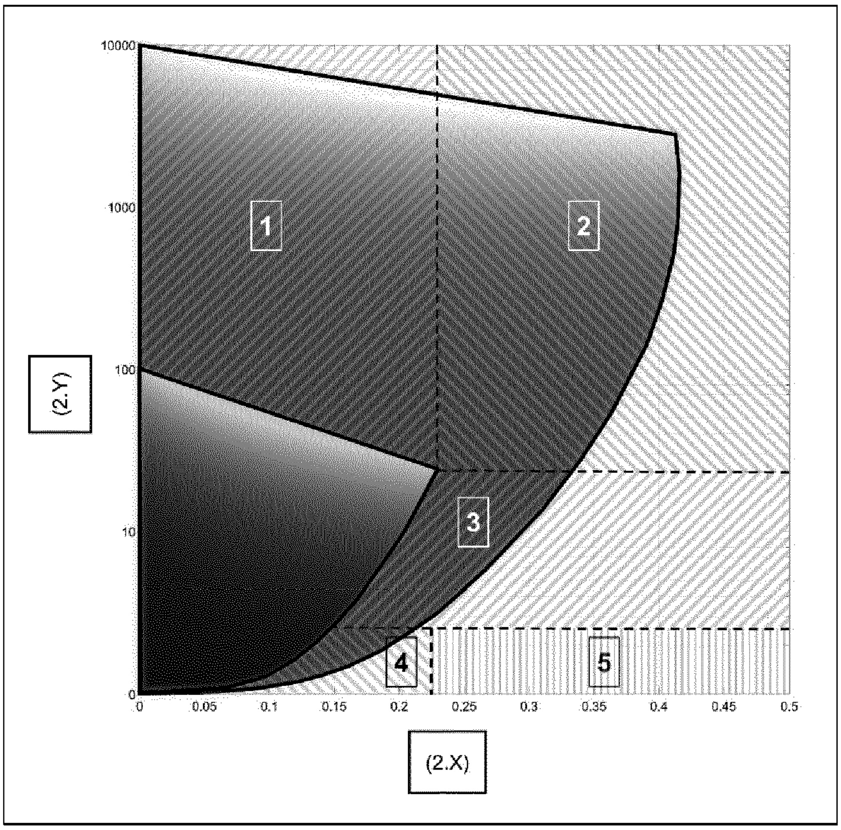
10000
1000
100
10
0
0
0.05
0.1
0.15
0.2
0.25
0.3
0.35
0.4
0.45
0.5
1
2
3
4
5
(2.Y)
(2.X)

Fig. 3

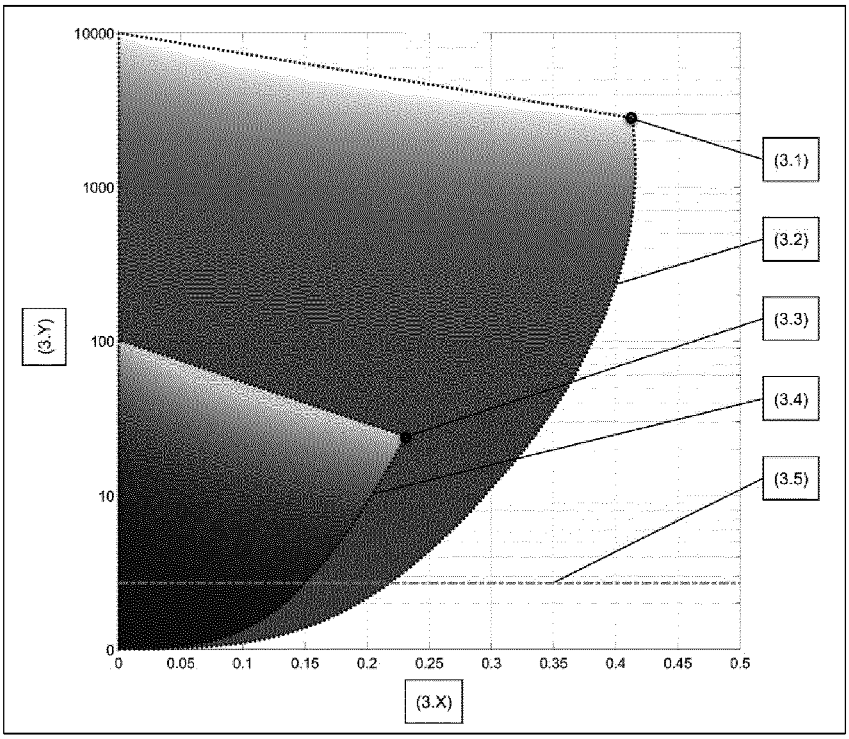
10000
1000
100
10
0
0
0.05
0.1
0.15
0.2
0.25
0.3
0.35
0.4
0.45
0.5
(3.1)
(3.2)
(3.3)
(3.4)
(3.5)
(3.Y)
(3.X)

Fig. 4

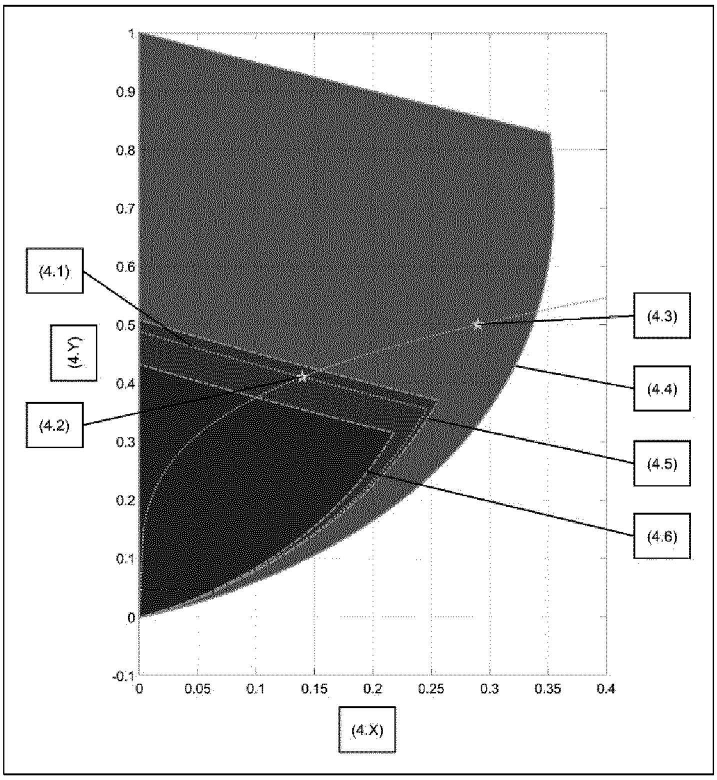
(4.1)
(4.2)
(4.3)
(4.4)
(4.5)
(4.6)
(4.Y)
(4.X)
1
0.9
0.8
0.7
0.6
0.5
0.4
0.3
0.2
0.1
0
-0.1
0
0.05
0.1
0.15
0.2
0.25
0.3
0.35
0.4

Fig. 5

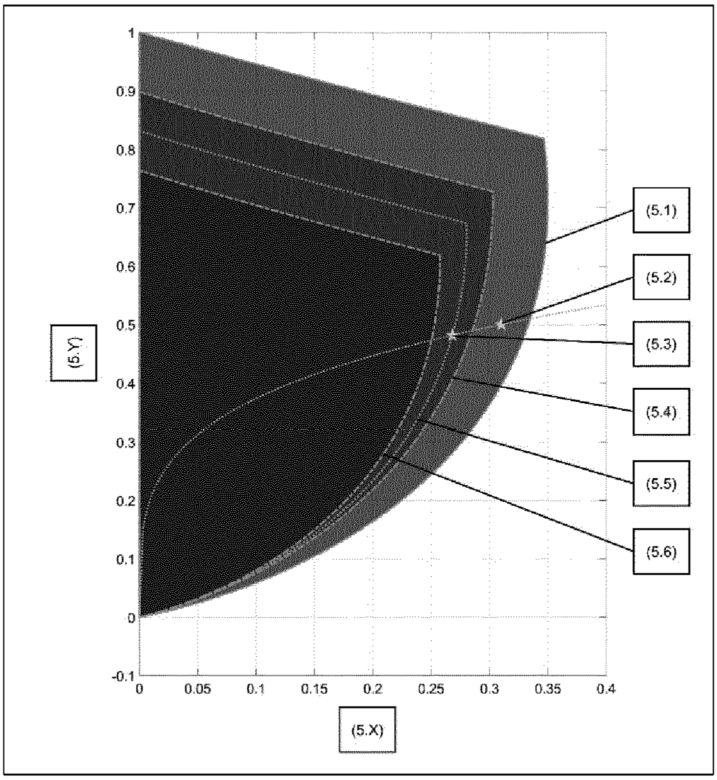
(5.1)
(5.2)
(5.3)
(5.4)
(5.5)
(5.6)
(5.Y)
(5.X)
1
0.9
0.8
0.7
0.6
0.5
0.4
0.3
0.2
0.1
0
-0.1
0
0.05
0.1
0.15
0.2
0.25
0.3
0.35
0.4

Fig. 6

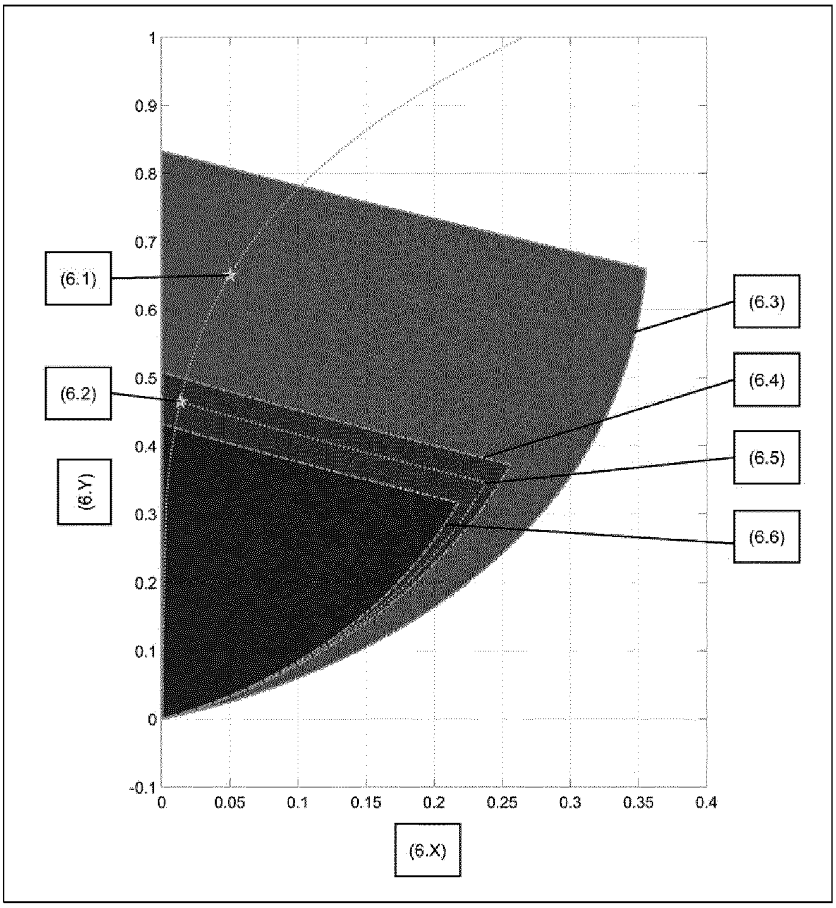
(6.1)
(6.2)
(6.3)
(6.4)
(6.5)
(6.6)
(6.Y)
(6.X)
1
0.9
0.8
0.7
0.6
0.5
0.4
0.3
0.2
0.1
0
-0.1
0
0.05
0.1
0.15
0.2
0.25
0.3
0.35
0.4

Fig. 7

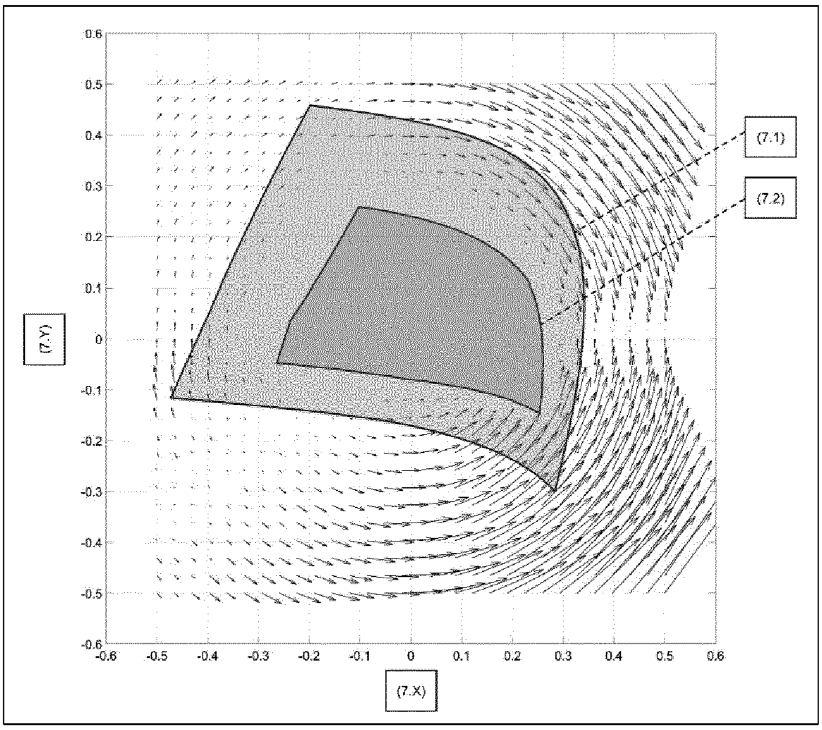
(7.1)
(7.2)
(7.Y)
(7.X)
0.6
0.5
0.4
0.3
0.2
0.1
0
-0.1
-0.2
-0.3
-0.4
-0.5
-0.6
-0.6
-0.5
-0.4
-0.3
-0.2
-0.1
0
0.1
0.2
0.3
0.4
0.5
0.6

Fig. 8

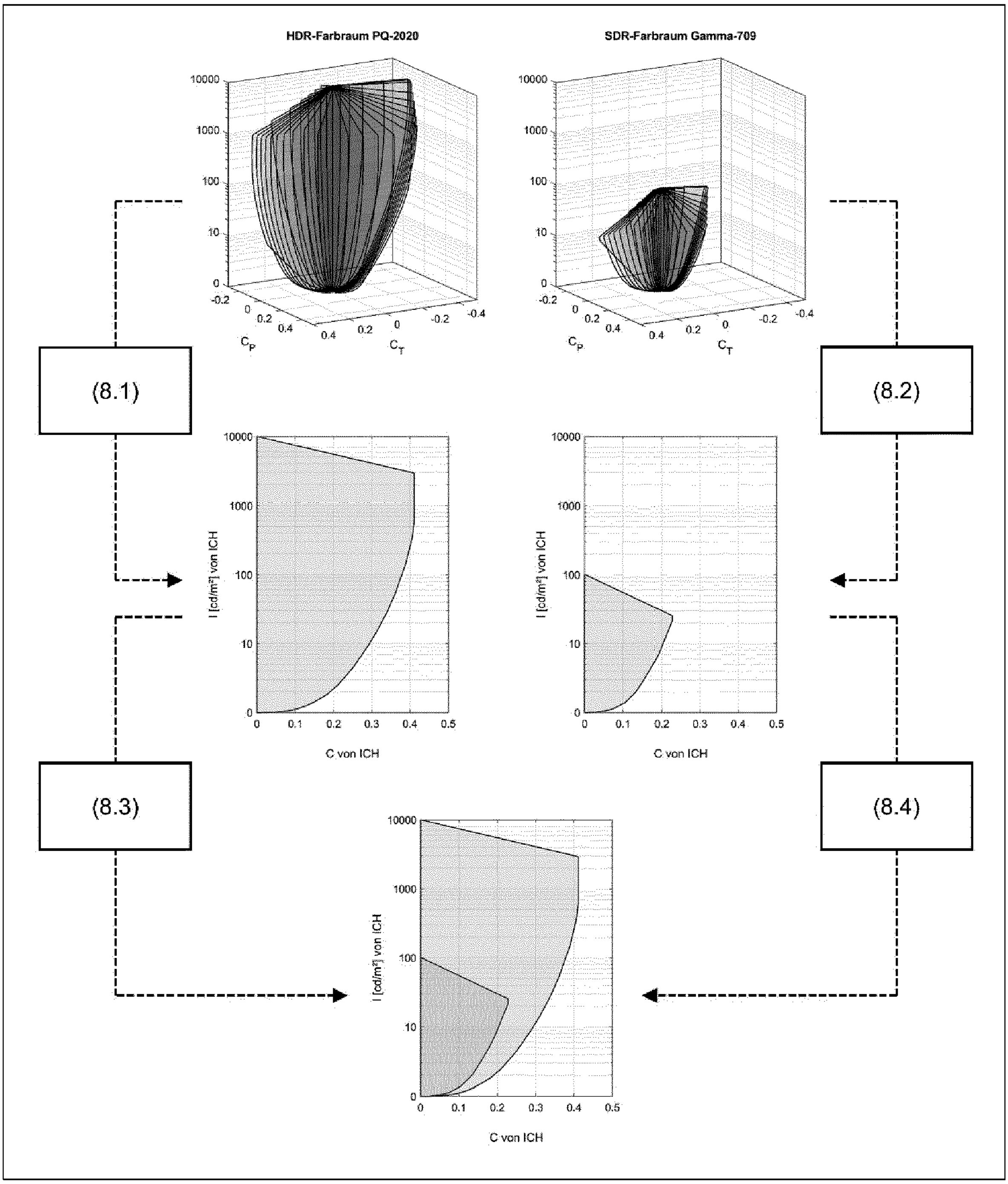

HDR-Farbraum PQ-2020
SDR-Farbraum Gamma-709
(8.1)
(8.2)
(8.3)
(8.4)
I [cd/m²] von ICH
C von ICH

Fig. 9

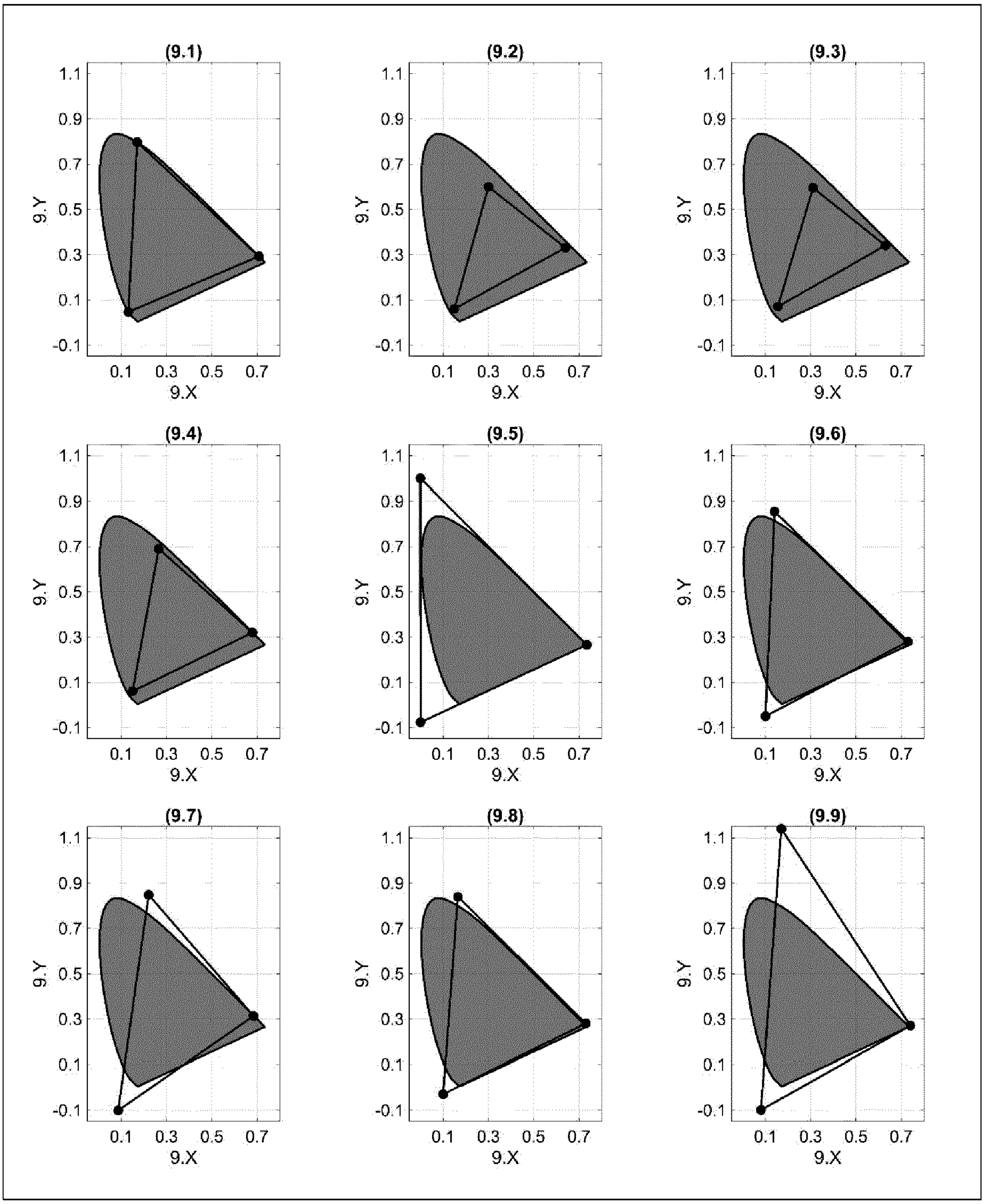

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 020190098317 A1
- US 020190325802 A1
- US 2019158894 A
- US 20201069928 A
- EP 0611230 A